# EUROPEAN PATENT SPECIFICATION

(11) **EP 1 790 881 B1**
(45) Date of publication and mention of the grant of the patent: **01.10.2014**
(21) Application number: 06008234.4
(22) Date of filing: 20.04.2006
(51) Int. Cl.: F16J 1/09

(54) **Piston**
Kolben
Piston

(30) Priority: 24.11.2005 KR 20050113048
(43) Date of publication of application: 30.05.2007
(73) Proprietor: Dong Yang Piston Co., Ltd., Danwon-gu Ansan-si Gyeonggi-do 425-838 (KR)
(72) Inventor: Hong, Kyung Pyo, Ansan-si Gyeonggi-do 425-020 (KR); Park, Sang Jo, Bucheon-si Gyeonggi-do 420-709 (KR); Nam, Hyun Woo, Siheung-si Gyeonggi-do 429-450 (KR); Shim, Woo Seok, Gunpo-si Gyeonggi-do 435-040 (KR); Lee, Jae Seung, Ansan-si Gyeonggi-do 425-130 (KR)
(74) Representative: Grünecker, Kinkeldey, Stockmair & Schwanhäusser

(56) References cited:
- EP-A- 1 063 409

## Description

### Field of the Invention

The present invention relates to a piston; and, more particularly, to a piston for improving a cooling efficiency of an oil gallery.

### Description of Related Arts

A piston is an engine component that slides back and forth in a cylinder to make reciprocating motion inside a cylinder by forces produced by explosions made in a combustion chamber. Such a piston includes the combustion chamber above of a head unit. While the engine is driven, a temperature of the piston increases by continues explosions made in the combustion chamber. The engine may be damaged if the temperature of the piston increases excessively. Therefore, the piston includes an oil gallery as a cooling unit to cool down the temperature of the piston. Generally, oil is injected from a nozzle into the oil gallery through an oil inlet, and the injected oil circulates the oil gallery to cool down the piston. (see EP-A-1063409)

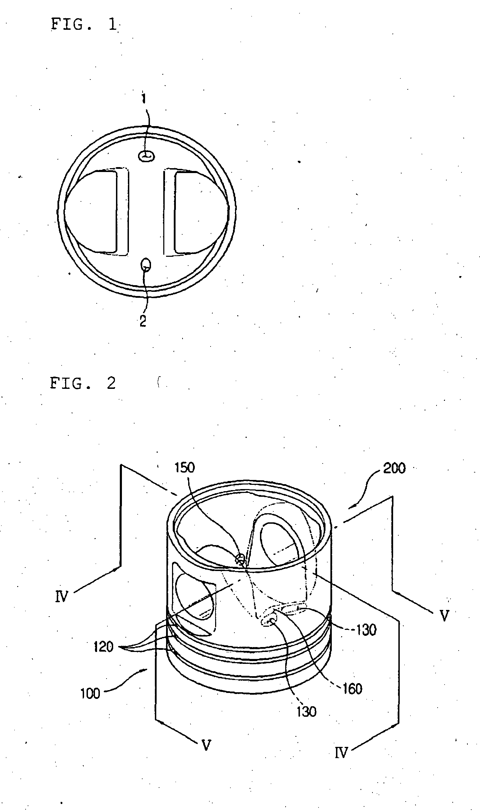

FIG. 1 shows a bottom view of a piston according to the related art.

Referring to FIG. 1, the piston according to the related art includes an oil inlet 1 and an oil outlet 2. The oil is injected from a nozzle (not shown) into the oil gallery through the oil inlet 1. The injected oil circulates the oil gallery. After circulating, the oil is drained out from the oil gallery through the oil outlet 2. However, the injected oil often drifts into one side of the oil gallery. That is, the oil may not circulate around the left side and the right side of the oil gallery in equilibrium. Therefore, the conventional oil gallery may not cool down the piston in equilibrium. Especially, if the nozzle (not shown) injects the oil in a diagonal direction, not in a vertical direction, from the oil inlet 1, a great amount of oil is injected to one side of the oil gallery that is directed by the oil injecting direction made by the nozzle. On the contrary, a comparatively small amount of oil is injected to other side of the oil gallery. Therefore, the balanced cooling may not be expected in the conventional piston, and the cooling efficiency is degraded thereby. Also, the oil may be leaked around the oil inlet 1 while injecting the oil from the nozzle through the oil inlet 1 because the oil is not exactly injected into the oil inlet 1. Therefore, the cooling efficiency is further degraded by the leakage oil.

### Summary of the Invention

It is, therefore, an object of the present invention to provide a piston for improving a cooling efficiency by cooling a left side and a right side of the piston in equilibrium.

In accordance with an aspect of the present invention, there is provided a piston including: a head unit; and a pipe shaped skirt unit extended from the head unit to the bottom of the head unit, wherein the head unit includes: a combustion chamber formed at an upper portion of the head unit and having ring grooves formed an outer circumference thereof, an oil dividing unit formed at a lower portion of the head unit; two oil inlets separated by the oil dividing unit; an oil outlet; a ring shaped oil gallery formed to be connected to the oil inlets and the oil outlet; and an oil dam formed along the edges of the oil inlets to have a height higher than the oil dividing unit.

The oil inlets may have a funnel shape.

The oil inlets may have an oval shape.

### Brief Description of the Drawings

The above and other features and advantages of the present invention will become more apparent by describing in detail exemplary embodiments thereof with reference to the attached drawings in which:
FIG. 1 shows a bottom view of a piston according to the related art;
FIG. 2 is a perspective view of a piston according to an embodiment of the present invention;
FIG. 3 is a bottom view of a piston according to an embodiment of the present invention;
FIG. 4 is a cross-sectional view of the FIG. 2 taken along a line IV-IV;
FIG. 5 is a cross-sectional view of the FIG. 2 taken along a line V-V; and
FIG. 6 is a cross-sectional view of FIG. 4 taken along the line VI-VI.

### Detailed Description of the Invention

Hereinafter, a piston will be described in more detail with reference to FIGs. 2 to 6.

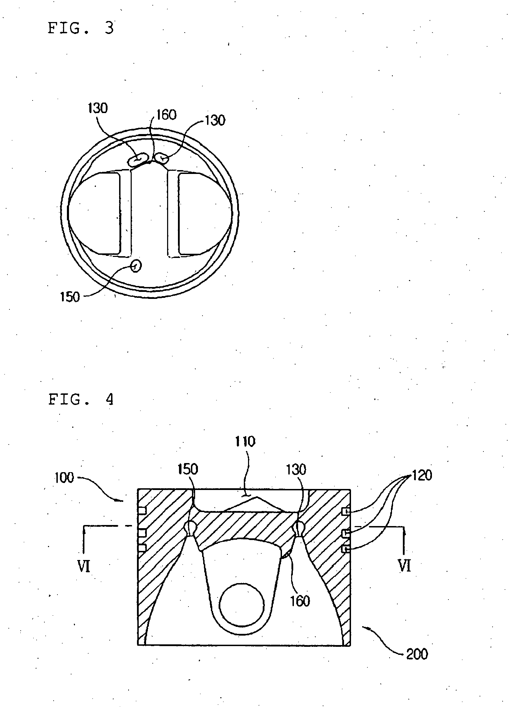

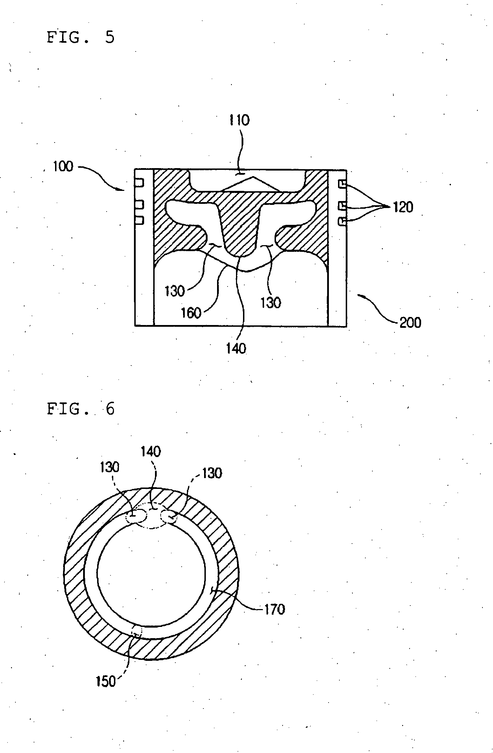

FIG. 2 is a perspective view of a piston according to an embodiment of the present invention, FIG. 3 is a bottom view of a piston according to an embodiment of the present invention, FIG. 4 is a cross-sectional view of the FIG. 2 taken along a line IV-IV, FIG. 5 is a cross-sectional view of the FIG. 2 taken along a line V-V and FIG. 6 is a cross-sectional view of FIG. 4 taken along the line VI-VI.

As shown, the piston according to the present embodiment includes a head unit 100 and a skirt unit 200. The skirt unit 200 is extended from the head unit 100 in a bottom direction and shaped like a pipe.

The head unit 100 includes a combustion chamber 110 at an upper portion thereof. Ring grooves 120 are formed around the outer circumference of the piston to receive piston rings (not shown). The head unit 100 also includes oil inlets 130, an oil dividing unit 140, an oil outlet 150 and an oil dam 160 at the lower portion of the head unit 100. Furthermore, an oil gallery 170 is formed inside thereof.

The oil is injected into the oil gallery 170 through the oil inlets 130. The piston according to the present embodiment includes two oil inlets 130. The two oil inlets 130 force the injected oil to be divided and circulate into the left side and the right side of the ring shaped oil gallery 170. It is preferable that each of the oil inlets 130 may be formed to have a funnel shape in order to quickly inject the oil into the oil gallery. Furthermore, each of the oil inlets 130 may be formed to have an oval shape to widen the front opening of the oil inlet 130. Moreover, the two oil inlets 130 may be formed in different sizes and shapes according to the direction of injecting the oil from the nozzles (not shown) in order to smoothly inject the oil. It is preferable that the two oil inlets 130 are formed to be symmetrically in shapes and sizes.

The oil dividing unit 140 is projected to a middle of the two oil inlets 130 to divide the injected oil to two oil-inflow paths. That is, when the oil is injected, the oil dividing unit 140 divides the injected oil to flow into the left side and the right side of the oil gallery 170 so as to circulate the oil in equilibrium within the oil gallery 170. It is preferable that the oil dividing unit 140 may be formed to have a curved top surface to smoothly divide the oil into the left side and the right side. Furthermore, the bottoms of the oil inlets 130 may be sloped to allow the divided oils to smoothly flow into the left side and the right side of the oil gallery 170.

The oil in the oil gallery 170 is drained through the oil outlet 150. The oil outlet 150 is formed at an opposite side of the oil gallery 170 from the oil inlet 130. However, the oil outlet 140 may be formed to lean to the left side or the right side to make lengths of oil-flow paths differently in order to control a cooling efficiency of the left side and the right side of the piston.

The oil dam 160 is formed along an edge of the oil inlet 130. The oil may be leaked around the edge of the oil inlet 130 while injecting the oil through the oil inlet 130 from the nozzle. If the oil is leaked, the leaked oil is not injected into the oil gallery through the oil inlet 130. The leaked oil is one of factors degrading the cooling efficiency because the leaked oil is not circulated within the oil gallery 170. Therefore, the piston according to the present embodiment includes the oil dam 160 to guide the leaked oil to inflow into the oil gallery 170 through the oil inlet 130. It is preferable that the oil dam 160 is formed to have a height higher than the oil dividing unit 140.

As described above, the piston according to the present invention includes two oil inlets to divide the oil injected from a single nozzle into the left side and the right side of the oil gallery in order to circulate the oil in the oil gallery in equilibrium. Therefore, the piston according to the present invention is cooled down in equilibrium. Especially, the piston according to the present invention guides the oil to flow into the both sides of the oil gallery in equilibrium although the oil is injected from the nozzle in a diagonal direction, not a vertical direction. Furthermore, the piston according to the present invention includes the oil dam formed along the edge of the oil inlet to guide the oil leaked around the oil inlets into the oil gallery. Therefore, the cooling efficiency of the piston is further improved according to the present invention.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A piston (100) comprising:
a head unit (100); and
a pipe shaped skirt unit (200) extended from the head unit to the bottom of the head unit,
wherein the head unit (100) includes:
a combustion chamber (110) formed at an upper portion of the head unit and having ring grooves (120) formed an outer circumference thereof,
an oil dividing unit (140) formed at a lower portion of the head unit (100);
two oil inlets (130) separated by the oil dividing unit (140); an oil outlet (150);
a ring shaped oil gallery (170) formed to be connected to the oil inlets (130) and the oil outlet (150); **characterised in that**
said unit (100) includes an oil dam (160) formed along the edges of the oil inlets (130) to have a height higher than the oil dividing unit (140).

2. The piston of claim 1, wherein the oil inlets (130) have a funnel shape.

3. The piston of claim 1, wherein the oil inlets (130) have an oval shape.

## Patentansprüche

1. Kolben, umfassend:
eine Kopfeinheit (100); und
eine röhrenförmige Krageneinheit (200), die sich von der Kopfeinheit zu dem Boden der Kopfeinheit erstreckt,
wobei die Kopfeinheit (100) beinhaltet:
eine Brennkammer (110), die an einem oberen Teil der Kopfeinheit ausgebildet ist und an ihrem Außenumfang Ringnuten (120) aufweist,
eine Ölaufteilungseinheit (140), die an einem unteren Abschnitt der Kopfeinheit (100) ausgebildet ist;
zwei Öleinführungen (130), die durch die Ölaufteilungseinheit (140) voneinander getrennt sind;
einen Ölablass (150);
eine ringförmige Ölleitung (170), die so ausgebildet ist, dass sie mit den Öleinführungen (130) und dem Ölablass (150) verbunden ist;
**dadurch gekennzeichnet, dass** die Einheit (100) aufweist
einen Öldamm (160), der entlang der Ränder der Öleinführungen (130) mit einer Höhe ausgebildet ist, die höher als die Ölaufteilungseinheit (140) ist.

2. Kolben nach Anspruch 1, wobei die Öleinführungen (130) trichterförmig sind.

3. Kolben nach Anspruch 1, wobei die Öleinführungen (130) oval sind.

## Revendications

1. Piston comprenant :
une unité de tête (100) ; et
une unité de jupe en forme de tuyau (200) s'étendant depuis l'unité de tête jusqu'au fond de l'unité de tête,
dans lequel l'unité de tête (100) comporte :
une chambre de combustion (110) formée au niveau de la partie supérieure de l'unité de tête et comportant des rainures annulaires (120) formées au niveau de sa circonférence externe,
une unité de séparation d'huile (140) formée au niveau de la partie inférieure de l'unité de tête (100) ;
deux entrées d'huile (130) séparées par l'unité de séparation d'huile (140) ;
une sortie d'huile (150) ;
une galerie d'huile de forme annulaire (170) formée de manière à être reliée aux entrées d'huile (130) et à la sortie d'huile (150) ;
**caractérisé en ce que** ladite unité (100) comporte
un barrage à huile (160) formé le long des bords des entrées d'huile (130) de manière à avoir une hauteur supérieure à l'unité de séparation d'huile (140).

2. Piston selon la revendication 1, dans lequel les entrées d'huile (130) ont une forme d'entonnoir.

3. Piston selon la revendication 1, dans lequel les entrées d'huile (130) ont une forme ovale.
